# EUROPÄISCHE PATENTSCHRIFT

(11) **EP 0 649 739 B1**
(45) Veröffentlichungstag und Bekanntmachung des Hinweises auf die Patenterteilung: **01.07.1998**
(21) Anmeldenummer: 94100434.3
(22) Anmeldetag: 13.01.1994
(51) Int. Cl.: B32B 27/34, B32B 1/08, F16L 11/04, C08L 77/00, C08L 33/24, F16L 9/12

(54) **Mehrschichtiges Kunststoffrohr**
Multilayered plastic hose
Tuyau multicouche en plastique

(30) Priorität: 25.10.1993 DE 4336290
(43) Veröffentlichungstag der Anmeldung: 26.04.1995
(73) Patentinhaber: HÜLS AKTIENGESELLSCHAFT, 45764 Marl (DE)
(72) Erfinder: Röber, Stefan, Dr., D-45772 Marl (DE); Jadamus, Hans, Dr., D-45768 Marl (DE); Böer, Michael, D-45739 Oer-Erkenschwick (DE); Feinauer, Roland, Dr., D-45770 Marl (DE); Hermann, Hans-Dieter, D-45770 Marl (DE); Ries, Hans, Dr., D-45772 Marl (DE)

(56) Entgegenhaltungen:
- EP-A- 0 464 561
- EP-A- 0 523 644
- EP-A- 0 551 094
- EP-A- 0 559 445
- FR-A- 2 577 564
- US-A- 4 415 706
- RESEARCH DISCLOSURE Nr. 320 , Dezember 1990 , EMSWORTH, GB Seiten 956 - 957 'Enhancements of properties of polyglutarimides when compounded with small amounts of polyamides'
- RESEARCH DISCLOSURE Nr. 321 , Januar 1991 , EMSWORTH , GB Seiten 68A - 68B 'Control of functionality in glutarimide polymers'

## Beschreibung

Gegenstand der Erfindung ist ein mehrschichtiges Kunststoffrohr.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium, beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. Zeigen sie erhebliche Nachteile, wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395; 37 15 251; 38 21 723; 40 01 125; 40 01 126). Die praktische Anwendung dieser Vorschläge hat jedoch gezeigt, daß zwar einzelne Nachteile vermieden werden können, daß aber das Gesamteigenschaftsbild immer noch nicht befriedigt.

In FR-PS 2 602 515 wird ein zweischichtiges Rohr mit einer Außenschicht aus Polyamid 11 und einer inneren Schicht aus weichgemachtem Polyvinylidenfluorid beschrieben. Untersuchungen haben jedoch gezeigt, daß die Sperrwirkung gegenüber dem durchfließenden Medium nicht befriedigt.

Vor allem die Permeation von methanolhaltigen Kraftstoffen konnte durch die obengenannten Vorschläge nur unzureichend verringert werden.

Die Reduzierung der Permeation durch Verwendung neuartiger Zwischenschichten ist insbesondere deshalb von entscheidender Bedeutung, weil die zulässigen Emissionswerte durch gesetzliche Vorschriften immer weiter abgesenkt werden.

EP-A-0523644 und EP-A-0559445 definieren krafstoffresistente, mehrschichtige Kunststoffrohre mit einer äußeren Lage aus Polyamid und einer inneren Lage aus Fluorkunststoff. Die Adhäsion zwischen Polyamid und dem Fluorkunststoff wird in EP-A-0523644 durch eine Zwischenschicht einer Mischung aus Polyamid und einem Fluor enthaltenden elastomeren Pfropfpolymer gewährleistet und in EP-A-0559445 durch Koronabehandlung des Fluorpolymers und anschließendem Auftrag einer Epoxy-Klebstoffschicht erreicht.

Aufgabe der Erfindung war es, ein Polyamidrohr mit einer guten Sperrwirkung gegen das transportierte Medium, vor allem gegenüber methanolhaltigen Kraftstoffen, einer zufriedenstellenden Maßhaltigkeit, z. B. bei hohen und tiefen Temperaturen, sowie einer befriedigenden mechanischen Belastbarkeit zu entwickeln.

Diese Aufgabe wird gelöst durch ein mehrschichtiges Kunststoffrohr mindestens bestehend aus
I. einer Außenschicht
II. einer zur Innenschicht benachbarten Zwischenschicht aus einer Formmasse auf Basis eines Gemisches aus
   a. Polyamid
      und
   b. Polyglutarimid
III. einer Innenschicht aus einer Formmasse auf Basis von Polyvinylidenfluorid,
wobei die jeweils benachbarten Schichten kraftschlüssig miteinander verbunden sind.

Für die Außenschicht gemäß I. sowie für die Komponente II.a. kommen in erster Linie aliphatische Homo- und Copolyamide in Frage. Als Beispiel seien die 4.6-; 6.6-; 6.12-; 8.10-; 10.10-Polyamide o. ä. genannt. Bevorzugt werden 6-; 10.12-; 11-; 12.12- sowie insbesondere 12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)-methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatisch/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Wiley & Sons (1982), S. 328 und 435, beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität (ηᵣₑₗ) im Bereich von 1,65 bis 2,4.

Als Polyamide für die Komponenten gemäß I. bzw. II.a. können gleiche oder unterschiedliche Polyamidtypen gewählt werden.

Bevorzugt sind Polyamide, die ≤ 50 % Aminoendgruppen, insbesondere < 20 % Aminoendgruppen, enthalten.

Die Polyamide der Außenschicht gemäß I. bzw. der Komponente II.a., können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates**, Interscience Publishers, New York (1981)], Acrylnitril/Styrol/Butadien-(Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat- (**Ullmanns** **Encyclopädie der technischen Chemie**, 4. Auflage, Bd. 19, Verlag Chemie Weinheim (1981), S. 277 - 295), Acrylnitril/Styrol-Copolymerisate (**Ullmanns Encyclopädie der technischen Chemie**, 4. Auflage, Bd. 19, Verlag Chemie Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide schlagzäh eingestellt werden. Geeignete Modifier sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Neben Polyamid als Komponente II.a. enthält die Zwischenschicht gemäß II. noch die Komponente II.b. Als Komponente II.b. werden Polyglutarimide eingesetzt, welche nachstehende Grundbausteine aufweisen:
i) < 100 Gew.-%, vorzugsweise
   10 bis 60 Gew.-% 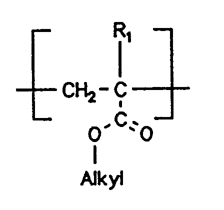
ii) < 100 Gew.-%, vorzugsweise
   30 bis 80 Gew.-% 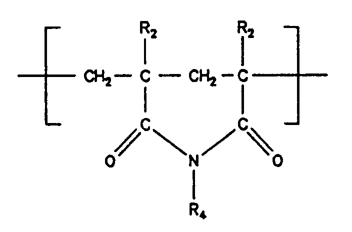
iii) < 20 Gew-%, vorzugsweise
   2 bis 10 Gew.-% 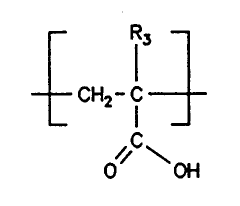
iv) 1,2 bis 20 Gew.-%, vorzugsweise
   1,5 bis 12 Gew.-%, insbesondere
   bevorzugt 2 bis 10 Gew.-%

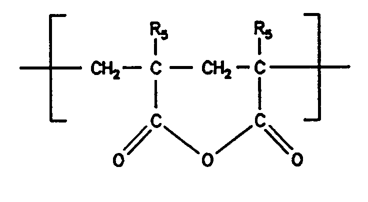

In den genannten Formeln bedeuten
Alkyl = Methyl, Ethyl, Propyl, Butyl, Hexyl
R₁ bis R₅ = -H, -(CₙH₂ₙ₊₁)
n = 1 bis 6,
wobei die Substituenten gleich oder verschieden sein können. Bevorzugt sind solche Grundbausteine, in denen Alkyl und R₁ bis R₅ einen Methylrest bedeuten.

Die genannten Polymeren der Komponente II.b. werden deswegen als Polyglutarimide bezeichnet, weil es sich um Poly(alkyl)acrylsäureester handelt, bei denen zwei benachbarte Carboxylatgruppen zu einem cyclischen Säureimid umgesetzt worden sind. Die Imidbildung wird bevorzugt mit Ammoniak bzw. primären Aminen, wie z. B. mit Methylamin, durchgeführt. Die Produkte sowie ihre Herstellung sind bekannt (Hans R. Kricheldorf, **Handbook of Polymer Synthesis**, Part A, Verlag Marcel Dekker Inc. New York - Basel - Hongkong, S. 223 f.; H. G. Elias, **Makromoleküle**, Hüthig und Wepf Verlag Basel - Heidelberg - New York; US-PSS 2 146 209, 4 246 374).

Die erfindungsgemäß eingesetzten Polyglutarimide weisen in der Regel einen Melt Flow-Index von < 30 g/10 min., vorzugsweise von 0,2 bis 10 g/min., auf.

Zur Erhöhung der Kälteschlagzähigkeit können die Polyglutarimide noch entsprechende Modifier enthalten. Als Beispiel seien Kern/Schale-Polymere mit einem Polybutylacrylatkern und einer Schale aus Polymethylmethacrylat und/oder Polyglutarimid genannt. Außer den genannten Beispielen sind weitere Modifier möglich.

Die Herstellung der Formmasse für die Schicht gemäß II. erfolgt nach üblichen und bekannten Verfahren durch Schmelzemischen der Komponenten II.a. und II.b. in einem gut knetenden Mischaggregat, wie z. B. einem Doppelschneckenkneter, bei Temperaturen, die sich nach den Schmelzpunkten der Komponenten II.a. und II.b. richten, im allgemeinen bei Temperaturen zwischen 230 und 330 °C.

Die Herstellung der Formmasse für die Schicht gemäß II. kann auch direkt in einem Speiseextruder, der zur Herstellung der mehrschichtigen Rohre in der verwendeten Coextrusionsanlage oder Spritzgußanlage eingesetzt ist, erfolgen, so daß die Formmasse für die Schicht gemäß II. direkt im Anschluß an ihre Herstellung - ohne weitere Zwischenlagerung - zu einer Schicht des mehrschichtigen Rohres verarbeitet werden kann.

Die Komponenten II.a. und II.b. werden im Gewichtsverhältnis 40 bis 90 : 50 bis 10, vorzugsweise 60 bis 80 : 40 bis 20 eingesetzt.

Die Innenschicht gemäß III. enthält insbesondere Polyvinylidenfluorid, welches bevorzugt weichmacherfrei eingesetzt wird. Herstellung und Struktur des Polymeren sind bekannt. (Hans R. Kricheldorf, **Handbook of Polymer Synthesis**, Part A, Verlag Marcel Dekker Inc. New York - Basel - Hongkong, S. 191 f.; **Kunststoff Handbuch**, 1. Auflage, Band XI, Carl Hanser Verlag München (1971), S. 403 ff.).

Es können auch Polymere auf Basis von Polyvinylidenfluorid erfindungsgemäß enthalten sein, die bis zu 40 Gew.-% andere Monomere aufweisen. Als solche zusätzlichen Monomere seien beispielhaft genannt: Trifluorethylen, Ethylen, Propen und Hexafluorpropen.

Das eingesetzte erfindungsgemäße Polyvinylidenfluorid weist in der Regel einen Melt Flow-Index von < 17 g/10 min., vorzugsweise von 2 bis 13 g/10 min. (DIN 53 735) auf.

Bevorzugt wird eine Schicht gemäß III., die elektrisch leitfähig (Oberflächenwiderstand < 10⁹ Ω) eingestellt ist. Insbesondere bevorzugt ist eine Innenschicht gemäß III., die a. aus einer äußeren Schicht auf Basis von Polyvinylidenfluorid und b. aus einer nach innen benachbarten Schicht besteht, die elektrisch leitfähig eingestellt ist und einen Oberflächenwiderstand von < 10⁹ Ω aufweist. Die gute elektrische Leitfähigkeit wird durch Zugabe von bis zu 15 Gew.-% von z. B. Leitfähigkeitsruß, Kohlenstoffasern o. ä. erreicht.

Den Formmassen für die Schichten gemäß I. bis III. können übliche Hilfs-und Zusatzstoffe wie z. B. Flammschutzmittel, Stabilisatoren, Weichmacher, Verarbeitungshilfsmittel, Viskositätsverbesserer, Füllstoffe, hier insbesondere solche zur Verbesserung der Leitfähigkeit, Pigmente o. ä. zugefügt werden. Die Menge der genannten Mittel ist so zu dosieren, daß die gewünschten Eigenschaften nicht ernsthaft beeinflußt werden.

Die Fertigung der mehrschichtigen Rohre erfolgt in bekannter, wie z. B. weiter oben im Stand der Technik beschriebenen Weise. Bevorzugt werden die Rohre auf dem Wege der Coextrusion hergestellt.

In der bevorzugten Ausführungsform haben die mehrschichtigen Rohre einen 3-schichtigen Aufbau - Schichtenfolge: I./II./III.

Bei einem erfindungsgemäßen 3-schichtigen Rohr mit einem Außendurchmesser von 8 mm und einer Gesamtwandstärke von 1 mm können die Schichtdicken beispielsweise von außen nach innen 0,8 mm/0,1 mm/0,1 mm betragen. Erfindungsgemäß sind auch andere Schichtdickenverteilungen denkbar, beispielsweise mit einer dickeren Innenschicht von z. B. 0,2 mm.

Darüber hinaus ist es auch möglich, neben einem 3-Schichtrohr andere Rohrtypen mit mehr als 3 Schichten herzustellen. Ferner ist es möglich, für die Schicht gemäß I. und die Komponente II.a. den gleichen Polyamid-Typ einzusetzen. In einer weiteren Ausführungsform kann für die Schicht gemäß I. ein Stoff eingesetzt werden, welcher vom Typ her der Komponente II. entspricht.

Die erfindungsgemäßen mehrschichtigen Rohre weisen in hervorragendem Maße eine gute Beständigkeit sowie gute Sperrwirkung gegen Diffusion gegenüber (petro)chemischen Stoffen, Lösemitteln und Kraftstoffen auf. Ferner sind die benachbarten Schichten kraftschlüssig miteinander verbunden, so daß es z. B. bei thermischer Ausdehnung oder Biegen eines Rohres kein Abscheren der benachbarten Schichten von einander auftritt.

Bevorzugt eingesetzt werden die erfindungsgemäßen Kunststoffrohre zum Transport (petro)chemischer Stoffe bzw. im Kraftfahrtsektor zum Durchleiten von Brems-, Kühl- und Hydraulikflüssigkeiten sowie Kraftstoff. Eine weitere Verwendung der mehrschichtigen Rohre besteht darin, daß aus ihnen Hohlkörper wie Tankbehälter oder Einfüllstützen, insbesondere für den Kraftfahrzeugsektor, hergestellt werden.

Die genannten Parameter wurden mit Hilfe nachstehender Meßverfahren bestimmt.

Die **Bestimmung der Lösungsviskosität** (rel. Viskosität ηᵣₑₗ) **der Polyamide** erfolgt unter Verwendung einer 0,5 gew.-%igen m-Kresol-Lösung bei 25 °C gemäß DIN 53 727/ISO 307.

Zur **Bestimmung der Aminoendgruppen** wird 1 g der Polyamide in 50 ml m-Kresol bei 25 °C gelöst. Die Lösung wird mit Perchlorsäure potentiometrisch titriert.

Zur **Bestimmung der Carboxylendgruppen** in den Polyamiden wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/1) gegen Phenolphthalein bis zum Farbumschlag titriert.

Die **Bestimmung des Melt Flow-Index der Polyglutarimide** erfolgt bei 230 °C und unter einer Belastung von 3,8 kg (DIN 53 735).

Die **Bestimmung des Melt Flow-Index der Polyvinylidenfluoride** erfolgt bei 230 °C und unter einer Belastung von 5 kg (DIN 53 735).

Di**e Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Die **Bestimmung der Diffusion** von Kraftstoffanteilen erfolgt an Rohren mit einem Kraftstoffgemisch (Kraftstoff M 15: 42,5 Vol.-Tle. Isooctan, 42,5 Vol.-Tle. Toluol und 15 Vol.-Tle. Methanol) bei 23 °C und 50 % Luftfeuchtigkeit. Die Proben mit der Länge von 200 mm werden mit dem Kraftstoffgemisch gefüllt und sind während der Messung mit einem gefüllten Vorratsbehältnis verbunden. Die Diffusion wird als Masseverlust durch Diffusion über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Beispiele sind nicht erfindungsgemäß. -

### Beispiele

### A. Komponente I.

- **PA 1:**: Polyamid 12 (ηᵣₑₗ: 2,1; Weichmachergehalt: 0; Aminoendgruppengehalt: 9 mmol/kg; Carboxylendgruppengehalt: 48 mmol/kg; VESTAMID® L 2140 - HÜLS AG)
- **PA 2:**: Polyamid 12 (ηᵣₑₗ: 2,1; Weichmachergehalt auf 100 Gew.-Tl. Polyamid: 15 Gew.-Tl. N-n-Butylbenzolsulfonamid; Aminoendgruppengehalt: 9 mmol/kg; Carboxylendgruppengehalt: 48 mmol/kg; VESTAMID® L 2124 - HÜLS AG)
- **PA 3:**: Polyamid 6.12 (ηᵣₑₗ: 1,9; Weichmachergehalt: 0)

### B. Komponente II.

Die Polyglutarimide bestehen aus den in Anspruch 8 als i) bis iv) bezeichneten Grundbausteinen, wobei Alkyl und R₁ bis R₅ eine Methylgruppe darstellen.

Die Mischungen für die Komponente II. werden in einem Doppelschneckenkneter bei einer Massetemperatur von 280 °C hergestellt.

Zusammensetzung der in den Beispielen eingesetzten Polyglutarimide:

| | Menge | Polyglutarimid | | Melt Flow-Index [g/10 min.] Polyglutarimid | |
|---|---|---|---|---|---|
| | | A | B | A | B |
| i) | Gew.-% | 18 | 57 | | |
| ii) | Gew.-% | 77 | 30 | | |
| iii) | Gew.-% | 3 | 3 | 0,4 | 0,4 |
| iv) | Gew.-% | 2 | 10 | | |

- **Z 1:**: Mischung aus
a. 50 Gew.-Tl. Polyamid 12 (ηᵣₑₗ: 2,1; Weichmachergehalt: 0; Aminoendgruppen: 9 mmol/kg; Carboxylendgruppen: 48 mmol/kg; VESTAMID® L 2140, HÜLS AG)
   und
b. 50 Gew.-Tl. Polyglutarimid A
- **Z 2:**: Mischung aus
a. 70 Gew.-Tl. Polyamid 12 (ηᵣₑₗ: 2,1; Weichmachergehalt: 0; Aminoendgruppen: 9 mmol/kg; Carboxylendgruppen: 48 mmol/kg; VESTAMID® L 2140 - HÜLS AG)
   und
b. 30 Gew.-Tl. Polyglutarimid A
- **Z 3:**: Mischung aus
a. 70 Gew.-Tl. Polyamid 12 (ηᵣₑₗ: 1,8; Weichmachergehalt: 0; Aminoendgruppen: 6 mmol/kg; Carboxylendgruppen: 73 mmol/kg; VESTAMID® L 1801 - Hüls AG)
   und
b. 30 Gew.-Tl. Polyglutarimid B
- **Z 4:**: Mischung aus
a. 60 Gew.-Tl. Polyamid 12 (ηᵣₑₗ: 2,1; Weichmachergehalt auf 100 Gew.-Tl. Polyamid: 15 Gew.-Tl. N-n-Butylbenzolsulfonamid; Aminoendgruppen: 9 mmol/kg; Carboxylendgruppen: 48 mmol/kg; VESTAMID® L 2124 - Hüls AG)
   und
b. 40 Gew.-Tl. Polyglutarimid A
- **Z 5:**: Mischung aus
a. 80 Gew.-Tl. Polyamid 12 (ηᵣₑₗ: 2,1; Weichmachergehalt auf 100 Gew.-Tl. Polyamid: 15 Gew.-Tl. N-n-Butylbenzolsulfonamid; Aminoendgruppen: 9 mmol/kg; Carboxylendgruppen: 48 mmol/kg; VESTAMID® L 2124 - Hüls AG)
   und
b. 20 Gew.-Tl. Polyglutarimid B

### C. Komponente III.

- **PVDF 1:**: Polyvinylidenfluorid (Melt Flow-Index: 13 g/10 min., DYFLOR® LE - HÜLS AG)
- **PVDF 2:**: Polyvinylidenfluorid (Melt Flow-Index: 8,5 g/10 min., DYFLOR® EE - HÜLS AG)
- **PVDF 3:**: Polyvinylidenfluorid (Melt Flow-Index: 8,5 g/10 min.; 6 Gew.-Tl. handelsüblicher Leitfähigkeitsruß (KETJEN BLACK™ EC 300 - AKZO) auf 100 Gew.-Tl. PVDF; DYFLOR® EE - HÜLS AG)

### D. Herstellung der mehrschichtigen Rohre

Die Rohre werden auf einer Laborextrusionsanlage mit einem Fünfschichtwerkzeug (bei der Herstellung der Rohre bleibt die jeweils entsprechende Anzahl an Kanälen geschlossen) hergestellt. Die Zylindertemperaturen lagen bei 230 °C (PA 1, PA 2, PA 3), 250 °C (PVDF 1, PVDF 2, PVDF 3), 260 °C (Z 2, Z 3, Z 4, Z 5) und 280 °C (Z 1).

Die Wandstärke der 3-Schichtrohre beträgt von außen nach innen: 0,75 mm/0,07 mm/0,18 mm. Bei den 2-Schichtrohren beträgt die Wandstärke von außen nach innen: 0,82 mm/0,18 mm bzw. die 1-Schichtrohre weisen eine Wandstärke von 1 mm auf.

**Tabelle**

| Versuch | Außenschicht gemäß I. | Zwischenschicht gemäß II. | Innenschicht gemäß III. | Diffusion [g/d m²] bei 23°C | An der Grenzfläche mechanisch trennbar | | | |
|---|---|---|---|---|---|---|---|---|
| | | | | | nach Lagerung bei 23 °C | | nach Lagerung in Kraftstoff^{*)} | |
| | | | | | Schicht I./II. | Schicht II./III. | Schicht I./II. | Schicht II./III. |
| A | PA 1 | - | - | 30 | - | - | - | - |
| B | PA 2 | - | - | 90 | - | - | - | - |
| C | - | PA 1 | PVDF 1 | 1,2 | - | ja | - | ja |
| 1 | PA 2 | Z 2 | PVDF 1 | 1,2 | nein | nein | nein | nein |
| 2 | PA 2 | Z 3 | PVDF 1 | 1,2 | nein | nein | nein | nein |
| 3 | PA 1 | Z 4 | PVDF 2 | 1,1 | nein | nein | nein | nein |
| 4 | PA 3 | Z 1 | PVDF 3 | 1,4 | nein | nein | nein | nein |
| 5 | PA 2 | Z 5 | PVDF 3 | 1,5 | nein | nein | nein | nein |
| 6 | Z 5 | Z 5 | PVDF 2 | 1,4 | - | nein | - | nein |
| 7 | Z 3 | Z 3 | PVDF 2 | 1,6 | - | nein | - | nein |

| | | | | | | | | |
|---|---|---|---|---|---|---|---|---|
| *) Lagerung bei 23 °C während 5 Tagen in Normkraftstoff M 15 | | | | | | | | |

## Patentansprüche

1. Mehrschichtiges Kunststoffrohr,
dadurch gekennzeichnet,
daß es mindestens besteht aus
I. einer Außenschicht,
II. einer zur Innenschicht benachbarten Zwischenschicht aus einer Formmasse auf Basis eines Gemisches aus
a. Polyamid
und
b. Polyglutarimid
III. einer Innenschicht aus einer Polyvinylidenfluorid-Formmasse,
wobei die jeweils benachbarten Schichten kraftschlüssig miteinander verbunden sind.

2. Mehrschichtiges Kunststoffrohr nach Anspruch 1,
dadurch gekennzeichnet,
daß die Schicht gemäß I. eine formmasse auf Basis eines Polyamids enthält.

3. Mehrschichtiges Kunststoffrohr nach den Ansprüchen 1 und 2,
dadurch gekennzeichnet,
daß die Schicht gemäß I. eine Formmasse auf Basis eines Polyamid 12 enthält.

4. Mehrschichtiges Kunststoffrohr nach den Ansprüchen 1 bis 3,
dadurch gekennzeichnet,
daß die Schicht gemäß I. eine Formmasse auf Basis eines Polyamid/Polyglutarimid-Blends enthält.

5. Mehrschichtiges Kunststoffrohr nach den Ansprüchen 1 bis 4,
dadurch gekennzeichnet,
daß die Komponenten für die Schicht gemäß I. und II.a. gleich sind.

6. Mehrschichtiges Kunststoffrohr nach den Ansprüchen 1 bis 5,
dadurch gekennzeichnet,
daß die Zwischenschicht gemäß II. eine Formmasse auf Basis eines Gemisches aus
a. 40 bis 90 Gew.-% eines Polyamids
und
b. 10 bis 60 Gew.-% eines Polyglutarimids
enthält.

7. Mehrschichtiges Kunststoffrohr nach den Ansprüchen 1 bis 6, dadurch gekennzeichnet, daß die Zwischenschicht gemäß II. eine Formmasse auf Basis eines Gemisches aus
a. 60 bis 80 Gew.-% eines Polyamids
und
b. 20 bis 40 Gew.-% eines Polyglutarimids
enthält.

8. Mehrschichtiges Kunststoffrohr nach den Ansprüchen 1 bis 7,
dadurch gekennzeichnet,
daß die Komponente II.b. nachstehende Grundbausteine aufweist:
i) < 100 Gew.-% 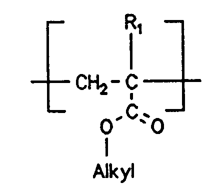
ii) < 100 Gew.-% 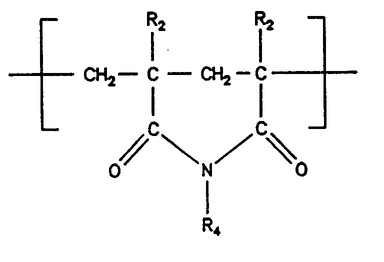
iii) < 20 Gew.-% 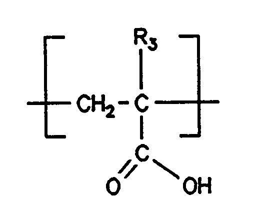
iv) 1,2 bis 20 Gew.-% 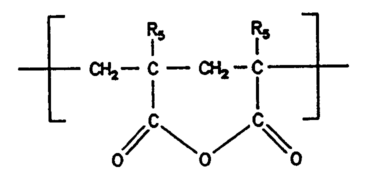
wobei Alkyl = Methyl, Ethyl, Propyl, Butyl, Hexyl
R₁ bis R₅ = -H, -(CₙH₂ₙ₊₁)
n = 1 bis 6 bedeuten
und die Substituenten gleich oder verschieden sein können.

9. Mehrschichtiges Kunststoffrohr nach den Ansprüchen 1 bis 8,
dadurch gekennzeichnet,
daß die Komponente II.b. nachstehende Grundbausteine aufweist:
i) 10 bis 60 Gew.-% 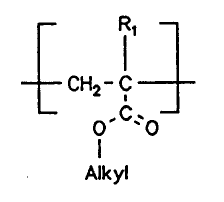
ii) 30 bis 80 Gew.-% 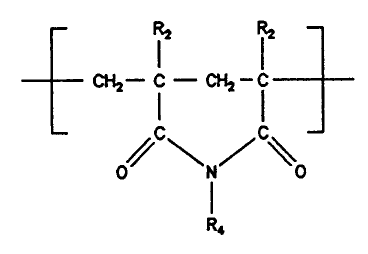
iii) 2 bis 10 Gew.-% 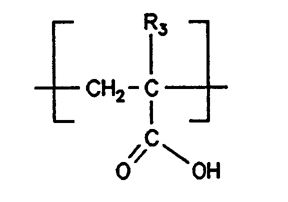
iv) 1,5 bis 12 Gew.-% 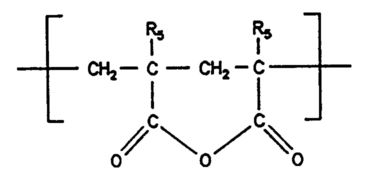
wobei Alkyl = Methyl, Ethyl, Propyl, Butyl, Hexyl
R₁ bis R₅ = -H, -(CₙH₂ₙ₊₁)
n = 1 bis 6 bedeuten
und die Substituenten gleich oder verschieden sein können.

10. Mehrschichtiges Kunststoffrohr nach den Ansprüchen 1 bis 9,
dadurch gekennzeichnet,
daß die Komponente II.b. nachstehenden Grundbaustein aufweist:
iv) 2 bis 10 Gew.-% 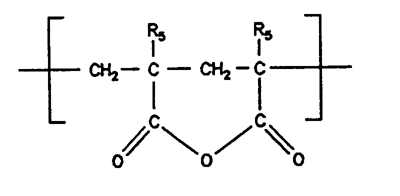
wobei R₅ = -H, -(CₙH₂ₙ₊₁) mit
n = 1 bis 6 bedeuten.

11. Mehrschichtiges Kunststoffrohr nach Anspruch 8 bis 10,
dadurch gekennzeichnet,
daß Alkyl sowie R₁ bis R₅ eine Methylgruppe darstellen.

12. Mehrschichtiges Kunststoffrohr nach den Ansprüchen 1 bis 11,
dadurch gekennzeichnet,
daß die Innenschicht gemäß III. eine Formmasse auf Basis eine Polyvinylidenfluorids mit einem Melt Flow-Index von < 17 g/10 min. enthält.

13. Mehrschichtiges Kunststoffrohr nach den Ansprüchen 1 bis 12,
dadurch gekennzeichnet,
daß die Innenschicht gemäß III. eine Formmasse auf Basis eines Polyvinylidenfluorids mit einem Melt Flow-Index von 2 bis 13 g/10 min. enthält.

14. Mehrschichtiges Kunststoffrohr nach den Ansprüchen 1 bis 13,
dadurch gekennzeichnet,
daß die Innenschicht gemäß III. eine Formmasse auf Basis eines Vinylidenfluoridcopolymeren enthält.

15. Mehrschichtiges Kunststoffrohr gemäß den Ansprüchen 1 bis 14,
dadurch gekennzeichnet,
daß die Innenschicht gemäß III. elektrisch leitfähig eingestellt ist und einen Oberflächenwiderstand von < 10⁹ Ω aufweist.

16. Mehrschichtiges Kunststoffrohr nach den Ansprüchen 1 bis 15,
dadurch gekennzeichnet,
daß die Innenschicht gemäß III. besteht aus
a. einer äußeren Schicht auf Basis von Polyvinylidenfluorid
und
b. einer nach innen benachbarten Schicht, die elektrisch leitfähig ist und einen Oberflächenwiderstand von < 10⁹ Ω aufweist.

17. Verwendung des mehrschichtigen Kunststoffrohres nach den Ansprüchen 1 bis 16 für den Transport (petro)chemischer Stoffe.

18. Verwendung des mehrschichtigen Kunststoffrohres nach den Ansprüchen 1 bis 16 auf dem Kraftfahrzeugsektor zum Durchleiten von Brems-, Kühl- und Hydraulikflüssigkeiten sowie Kraftstoff.

19. Verwendung des mehrschichtigen Kunststoffrohres nach den Ansprüchen 1 bis 16 zur Herstellung von Hohlkörpern.

20. Verwendung des mehrschichtigen Kunststoffrohres nach den Ansprüchen 1 bis 16 zur Herstellung von Einfüllstutzen oder Tankbehältern im Kraftfahrzeugsektor.

## Claims

1. A multilayer plastic pipe, characterized in that it comprises at least
I. an outer layer
II. an intermediate layer which is adjacent to the inner layer and which is made of a moulding composition based on a mixture of
a. polyamide
and
b. polyglutarimide
III. an inner layer made of a polyvinylidene fluoride moulding composition,
the adjacent layers being each adhesively bonded to one another.

2. A multilayer plastic pipe according to claim 1, characterized in that the layer according to I. comprises a moulding composition based on a polyamide.

3. A multilayer plastic pipe according to either of claims 1 and 2, characterized in that the layer according to I. comprises a moulding composition based on a polyamide 12.

4. A multilayer plastic pipe according to any of claims 1 to 3, characterized in that the layer according to I. comprises a moulding composition based on a polyamide/polyglutarimide blend.

5. A multilayer plastic pipe according to any of claims 1 to 4, characterized in that the components for the layers according to I. and II.a. are identical.

6. A multilayer plastic pipe according to any of claims 1 to 5, characterized in that the intermediate layer according to II. comprises a moulding composition based on a mixture of
a. from 40 to 90% by weight of a polyamide
and
b. from 10 to 60% by weight of a polyglutarimide.

7. A multilayer plastic pipe according to any of claims 1 to 6, characterized in that the intermediate layer according to II. comprises a moulding composition based on a mixture of
a. from 60 to 80% by weight of a polyamide
and
b. from 20 to 40% by weight of a polyglutarimide.

8. A multilayer plastic pipe according to any of claims 1 to 7, characterized in that the component II.b. comprises the following basic building blocks:
i) < 100% by weight of 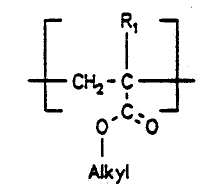
ii) < 100% by weight of 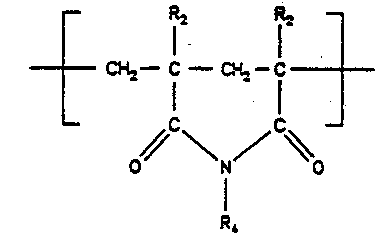
iii) < 20% by weight of 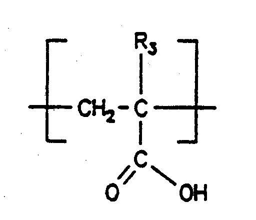
iv) from 1.2 to 20% by weight of 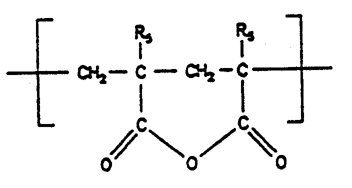
where alkyl = methyl, ethyl, propyl, butyl, hexyl,
R₁ to R₅ = H, (CₙH₂ₙ₊₁)
and n = from 1 to 6
and the substituents may be identical or different.

9. A multilayer plastic pipe according to any of claims 1 to 8, characterized in that the component II.b. comprises the following basic building blocks:
i) from 10 to 60% by weight of 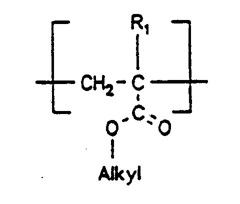
ii) from 30 to 80% by weight of 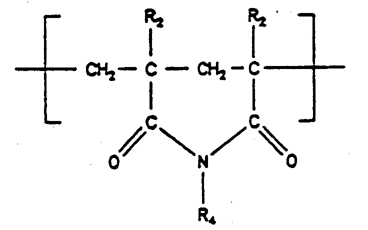
iii) from 2 to 10% by weight of 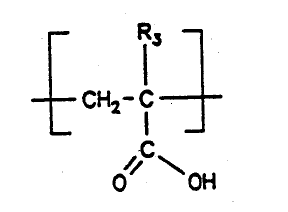
iv) from 1.5 to 12% by weight of 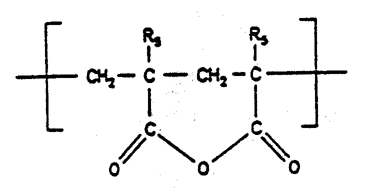
where alkyl = methyl, ethyl, propyl, butyl, hexyl,
R₁ to R₅ = H, (CₙH₂ₙ₊₁)
and n = from 1 to 6
and the substituents may be identical or different.

10. A multilayer plastic pipe according to any of claims 1 to 9, characterized in that the component II.b. comprises the following basic building block:
iv) from 2 to 10% by weight of 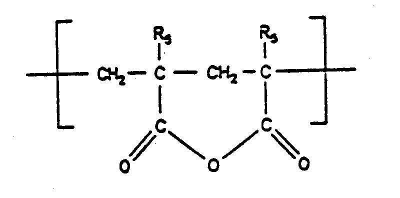
where R₅ = H, (CₙH₂ₙ₊₁)
with n = from 1 to 6.

11. A multilayer plastic pipe according to any of claims 8 to 10, characterised in that alkyl and R₁ to R₅ area methyl groups.

12. A multilayer plastic pipe according to any of claims 1 to 11, characterized in that the inner layer according to III. comprises a moulding composition based on a polyvinylidene fluoride having a melt flow index of < 17 g/10 min.

13. A multilayer plastic pipe according to any of claims 1 to 12, characterized in that the inner layer according to III. comprises a moulding composition based on a polyvinylidene fluoride having a melt flow index from 2 to 13 g/10 min.

14. A multilayer plastic pipe according to any of claims 1 to 13, characterized in that the inner layer according to III. comprises a moulding composition based on a vinylidene fluoride copolymer.

15. A multilayer plastic pipe according to any of claims 1 to 14, characterized in that the inner layer according to III. is made electrically conductive and has a surface resistance of < 10⁹ Ω.

16. A multilayer plastic pipe according to any of claims 1 to 15, characterised in that the inner layer according to III. consists of
a. an outer layer based on polyvinylidene fluoride and
b. an adjacent layer on the inside which is electrically conductive and has a surface resistance of < 10⁹ Ω.

17. Use of a multilayer plastic pipe according to any of claims 1 to 16 for the transport of (petro)chemical substances.

18. Use of a multilayer plastic pipe according to any of claims 1 to 16 in the motor vehicle sector for carrying brake, cooling and hydraulic fluids and also fuel.

19. Use of a multilayer plastic pipe according to any of claims 1 to 16 for the production of hollow bodies.

20. Use of a multilayer plastic pipe according to any of claims 1 to 16 for the production of filling ports or tanks in the motor vehicle sector.

## Revendications

1. Tube en matière synthétique à plusieurs couches,
caractérisé en ce qu'
il se compose au moins :
I. d'une couche externe
II. d'une couche intermédiaire voisine de la couche interne et constituée d'une masse à mouler à base d'un mélange de
a. polyamide
et
b. polyglutarimide
III. d'une couche interne faite d'une masse à mouler en fluorure de polyvinylidène,
les couches voisines étant toujours reliées entre elles par interpénétratlon par la force.

2. Tube en matière synthétique à plusieurs couches selon la revendication 1,
caractérisé en ce que
la couche selon 1 contient une masse à mouler à base d'un polyamide.

3. Tube en matière synthétique à plusieurs couches selon les revendications 1 et 2,
caractérisé en ce que
la couche selon 1 contient une masse à mouler à base d'un polyamide 12.

4. Tube en matière synthétique à plusieurs couches selon les revendications 1 à 3,
caractérisé en ce que
la couche selon 1 contient une masse à mouler à base d'un mélange Polyamide/polyglutarimide.

5. Tube en matière synthétique à plusieurs couches selon les revendications 1 à 4,
caractérisé en ce que
les composants pour la couche selon I et IIa sont identiques.

6. Tube en matière synthétique à plusieurs couches selon les revendications 1 à 5,
caractérisé en ce que
la couche intermédiaire selon II contient une masse à mouler à base d'un mélange de
a. 40 à 90 % en poids d'un polyamide
et
b. 10 à 60 % en poids d'un polyglutarimide.

7. Tube en matière synthétique à plusieurs couches selon les revendications 1 à 6,
caractérisé en ce que
la couche intermédiaire selon II contient une masse à mouler à base d'un mélange de
a. 60 à 80 % en poids d'un polyamide
et
b. 20 à 40 % en poids d'un polyglutarimide.

8. Tube en matière synthétique à plusieurs couches selon les revendications 1 à 7,
caractérisé en ce que
le composant IIb présente les constituants de base suivants :
i) < 100 % en poids 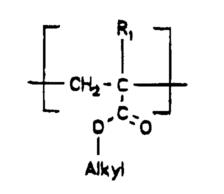
ii) < 100 % en poids 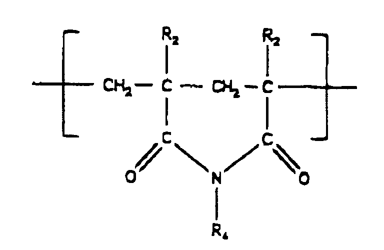
iii) < 20 % en poids 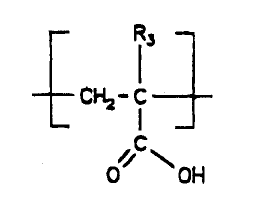
iv) 1,2 à 20 % en poids 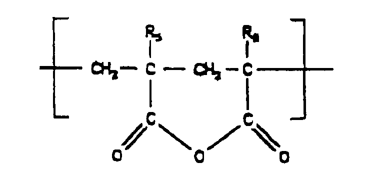
où alkyle = méthyle, éthyle, propyle, butyle, hexyle
R₁ à R₅ = -H, -(CₙH₂ₙ₊₁)
n = 1 à 6
et les substituants peuvent être identiques ou différents.

9. Tube en matière synthétique à plusieurs couches selon les revendications 1 à 8,
caractérisé en ce que
le composant IIb présente les constituants de base suivants :
i) 10 à 60 % en poids 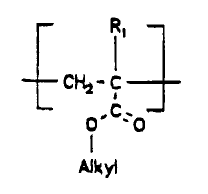
ii) 30 à 80 % en poids 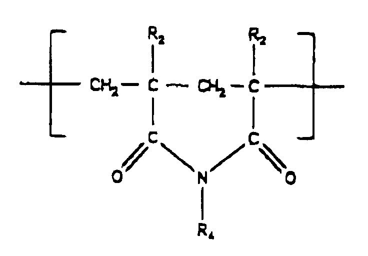
iii) 2 à 10 % en poids 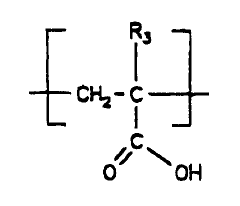
iv) 1,5 à 12 % en poids 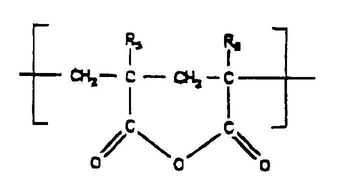
où alkyle = méthyle, éthyle, propyle, butyle, hexyle
R₁ à R₅ = -H, -(CₙH₂ₙ₊₁)
n = 1 à 6
et les substituants peuvent être identiques ou différents.

10. Tube en matière synthétique à plusieurs couches selon les revendications 1 à 9,
caractérisé en ce que
le composant IIb présente les constituants de base suivants :
iv) de 2 à 10 % en poids 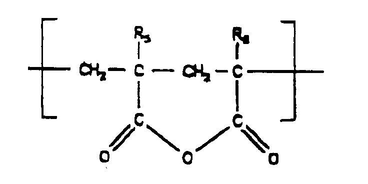
où R₅ = -H, -(CₙH₂ₙ₊₁) avec
n = 1 à 6

11. Tube en matière synthétique à plusieurs couches selon les revendications 1 à 10,
caractérisé en ce que
l'alkyle ainsi que R₁ à R₅ représentent un groupe méthyle.

12. Tube en matière synthétique à plusieurs couches selon les revendications 1 à 11,
caractérisé en ce que
la couche interne selon III est une masse à mouler à base d'un fluorure de polyvinylidène ayant un indice de fusion de flux < 17 g/10 minutes.

13. Tube en matière synthétique à plusieurs couches selon les revendications 1 à 12,
caractérisé en ce que
la couche interne selon III est une masse à mouler à base d'un fluorure de polyvinylidène ayant un indice de fusion de flux de 2 à 13 g/10 minutes.

14. Tube en matière synthétique à plusieurs couches selon les revendications 1 à 13,
caractérisé en ce que
la couche interne selon III contient une masse à mouler à base d'un copolymère de fluorure de polyvinylidène.

15. Tube en matière synthétique à plusieurs couches selon les revendications 1 à 14,
caractérisé en ce que
la couche interne selon III est réglée pour transmission de l'électricité et présente une résistance superficielle inférieure à 10⁹ Ω.

16. Tube en matière synthétique à plusieurs couches selon les revendications 1 à 15,
caractérisé en ce que
la couche interne selon III se compose de
a. une couche externe à base de fluorure de polyvinylidène et
b. une couche voisine vers l'intérieur, qui est conductrice de l'électricité et présente une résistance superficielle inférieure à 10⁹ Ω.

17. Utilisation du tube en matière synthétique à plusieurs couches selon les revendications 1 à 16 pour le transport des matières (pétro)chimiques.

18. Utilisation du tube en matière synthétique à plusieurs couches selon les revendications 1 à 16 dans le secteur automobile pour le passage des liquides de frein, de refroidissement, et hydrauliques, ainsi que du carburant.

19. Utilisation du tube en matière synthétique à plusieurs couches selon les revendications 1 à 16 pour la fabrication de corps creux.

20. Utilisation du tube en matière synthétique à plusieurs couches selon les revendications 1 à 16 pour la fabrication de tubulures de remplissage ou de récipients réservoirs dans le secteur automobile.
